# EUROPEAN PATENT SPECIFICATION

(11) **EP 0 423 078 B1**
(45) Date of publication and mention of the grant of the patent: **28.12.1994**
(21) Application number: 90830431.4
(22) Date of filing: 02.10.1990
(51) Int. Cl.: B60N 2/02, A47C 7/46

(54) **A backrest having a profile variable with pneumatic elements**
Rückenlehne mit einem durch pneumatische Elemente veränderlichen Profil
Dossier à profil variable au moyen d'éléments pneumatiques

(30) Priority: 10.10.1989 IT 6786689
(43) Date of publication of application: 17.04.1991
(73) Proprietor: FIAT AUTO S.p.A., 10135 Torino (IT)
(72) Inventor: Dal Monte, Antonio, I-00196 Roma (IT)
(74) Representative: Gerbino, Angelo

(56) References cited:
- AU-A- 511 046
- DE-A- 3 735 428
- DE-A- 3 804 848
- DE-A- 3 804 960
- FR-A- 1 306 814
- US-A- 4 696 516

## Description

The present invention relates to a backrest including padding, particularly for a motor-vehicle seat, as per the pre-characterizing part of claim 1 (see for example EP-A-0 312 506).

From DE-A-3 735 428 another backrest for a motor-vehicle seat is known, which is adaptable by means of inflatable pneumatic elements located outside and behind the padding.

The object of the present invention is to provide a backrest whose vertical profile can be adapted to the greater or lesser arcuate configurations of the vertebral columns of different users.

This object is achieved by a backrest of the type indicated above, which further includes the technical features disclosed in the characterizing part of claim 1.

An advantage offered by the backrest according to the invention consists of the fact that the configuration of the lumbar region, and hence its characteristics of transverse restraint, remain unaltered whatever the state of inflation of the pneumatic elements and it always provides correct support for the user's back.

Further characteristics and advantages of the present invention will become clear from the detailed description which follows with reference to the appended drawings, provided by way of non-limiting example, in which:
Figure 1 is a side elevation of a motor-vehicle seat provided with a backrest according to the invention,
Figure 2 is a side elevation of the seat of Figure 1 in a different operative configuration, and
Figure 3 is a schematic front view of some details of the seat shown in the previous drawings.

With reference to the drawings, a backrest 2 of a front seat for a motor vehicle has padding 3 constituted by a rear layer 4 of foam plastics material which provides good load-bearing characteristics and a front layer 6, again of a foam plastics material but more yielding and deformable than the first layer 4. The rear region of the padding 3 has a curved profile 7 in correspondence with the lumbar region.

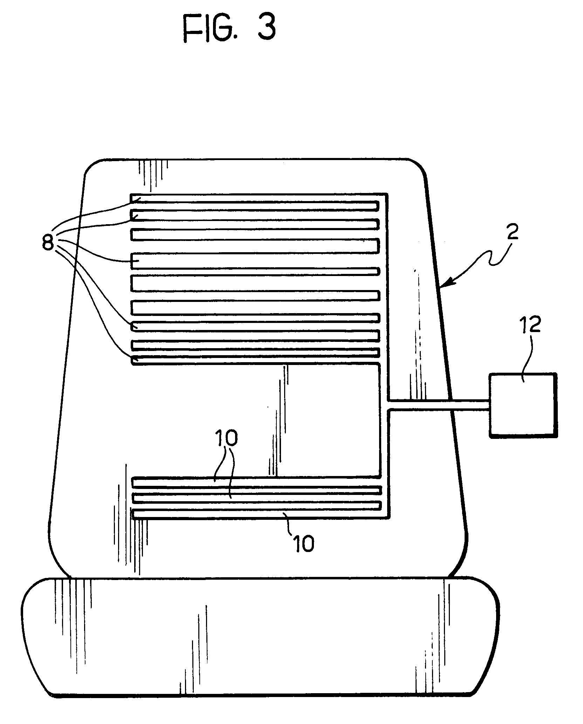

Inflatable pneumatic elements 8, 10 are glued between the two layers 4, 6 in correspondence with the dorsal and sacral regions. These elements 8, 10 (Figure 3) are constituted by a plurality of intercommunicating tubes arranged horizontally and substantially parallel to each other. A known electrically- or mechanically-operated device, schematically indicated 12, enables the pneumatic elements 8, 10 to be inflated/deflated to assume a desired configuration.

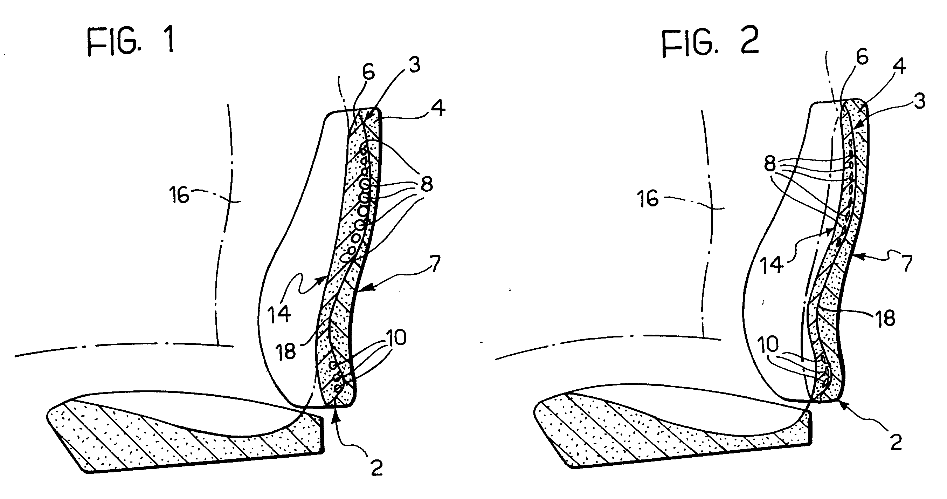

When the pneumatic elements 8, 10 are inflated, the vertical profile 14 of the front layer 6 of padding 3 assumes a slightly curved configuration (Figure 1). The deflation of the pneumatic elements 8, 10, to an extent which can be determined at will, on the other hand, causes the formation of undulations in the vertical profile 14 (Figure 2) which can house the back and glutei of a person 16 whose vertebral column is characterised, for example, by pronounced dorsal kyphosis or lumbar lordosis.

In all conditions, the shape of the lumbar region 18 of the padding 3 remains unaltered and, by virtue of the curved profile 7 of the rear region, its characteristics of transverse restraint thus remain unchanged.

In an alternative embodiment of the invention, not illustrated, the dorsal and sacral pneumatic elements are separate from each other. The respective inflation states can thus be adjusted independently providing an increased capacity for adaptation to different shapes of users' vertebral columns.

## Claims

1. A backrest (2), particularly for a motor-vehicle seat, including padding (3) and adjustable elements (8, 10) within the padding (3), the elements being adapted to make the front region of the padding (3) assume a slightly curved vertical profile or alternatively an undulate vertical profile, characterised in that the padding (3) is constituted by at least a rear layer (4) and a front layer (6) of foam plastics material, the front layer (6) being softer than the rear layer (4), in that the adjustable elements (8, 10) are inflatable pneumatic elements, interposed between the two layers (4, 6) in correspondence with the dorsal region and the sacral region of the backrest (2) respectively, and in that the rear region of the padding (3) has a curved profile (7) in correspondence with the lumbar region, whereby its characteristics of transverse restrain remain unchanged in all situations.

2. A backrest (2) according to Claim 1, characterised in that the inflatable pneumatic elements (8, 10) are constituted by a plurality of intercommunicating tubes arranged horizontally and substantially parallel to each other.

3. A backrest (2) according to Claim 1, characterised in that the dorsal and sacral inflatable pneumatic elements (8, 10) are separated from each other.

4. A backrest (2) according to any one of the preceding claims, characterised in that the pneumatic elements (8, 10) are glued to the padding (3).

## Patentansprüche

1. Rückenlehne (2), insbesondere für Kraftfahrzeugsitze, umfassend eine Polsterung (3) und einstellbare Elemente (8, 10) in der Polsterung (3), wobei die Elemente dazu ausgelegt sind, den vorderen Bereich der Polsterung (3) ein leicht gekrümmtes vertikales Profil oder alternativ ein wellenförmiges vertikales Profil annehmen zu lassen, dadurch gekennzeichnet, daß die Polsterung (3) von wenigstens einer hinteren Schicht (4) und einer vorderen Schicht (6) aus aufgeschäumtem Kunststoffmaterial gebildet ist, wobei die vordere Schicht (6) weicher als die hintere Schicht (4) ist, daß die einstellbaren Elemente (8, 10) aufblasbare pneumatische Elemente sind, die zwischen den beiden Schichten (4, 6) gemäß dem Rückenbereich bzw. dem Kreuzbereich der Rückenlehne (2) angeordnet sind, und daß der hintere Bereich der Polsterung (3) ein gekrümmtes. Profil (7) gemäß dem Lendenbereich aufweist, wodurch ihre Querhalteeigenschaften in allen Situationen unverändert bleiben.

2. Rückenlehne (2) nach Anspruch 1, dadurch gekennzeichnet, daß die aufblasbaren pneumatischen Elemente (8, 10) von einer Mehrzahl miteinander in Verbindung stehender Rohre gebildet sind, welche horizontal und im wesentlichen parallel zueinander angeordnet sind.

3. Rückenlehne (2) nach Anspruch 1, dadurch gekennzeichnet, daß die aufblasbaren pneumatischen Elemente (8, 10) für Rücken und Kreuz voneinander getrennt sind.

4. Rückenlehne (2) nach einem der vorhergehenden Ansprüche, dadurch gekennzeichnet, daß die pneumatischen Elemente (8, 10) an die Polsterung (3) geklebt sind.

## Revendications

1. Dossier (2) notamment destiné à un siège de véhicule à moteur, comprenant un rembourrage (3) et des éléments réglables (8, 10) placés dans le rembourrage (3), ces éléments étant destinés à donner à la région avant du rembourrage (3) un profil vertical légèrement courbé ou au contraire un profil vertical ondulé, caractérisé en ce que le rembourrage (3) est constitué au moins par une couche arrière (4) et une couche avant (6) de mousse de matière plastique, la couche avant (6) étant plus souple que la couche arrière (4), en ce que les éléments réglables (8, 10) sont des éléments pneumatiques gonflables placés entre les deux couches (4, 6) à des emplacements correspondant à la région dorsale et à la région du sacrum du dossier (2) respectivement, et en ce que la région arrière du rembourrage (3) a un profil courbe (7) qui correspond à la région lombaire, si bien que ses caractéristiques de retenue transversale restent inchangées dans toutes les situations.

2. Dossier (2) selon la revendication 1, caractérisé en ce que les éléments pneumatiques gonflables (8, 10) sont constitués par plusieurs tubes communicants disposés horizontalement et pratiquement parallèles les uns aux autres.

3. Dossier (2) selon la revendication 1, caractérisé en ce que les éléments pneumatiques gonflables (8, 10) du dos et du sacrum sont séparés mutuellement.

4. Dossier (2) selon l'une quelconque des revendications précédentes, caractérisé en ce que les éléments pneumatiques (8, 10) sont collés au rembourrage (3).
